# EUROPEAN PATENT SPECIFICATION

(11) **EP 2 837 784 B1**
(45) Date of publication and mention of the grant of the patent: **12.07.2017**
(21) Application number: 12874118.8
(22) Date of filing: 09.04.2012
(51) Int. Cl.: F01N 3/08, F01N 3/36, F01N 3/20

(54) **EXHAUST PURIFICATION DEVICE FOR INTERNAL COMBUSTION ENGINE**
ABGASREINIGUNGSVORRICHTUNG FÜR EINE BRENNKRAFTMASCHINE
DISPOSITIF DE PURIFICATION DE GAZ D'ÉCHAPPEMENT POUR UN MOTEUR À COMBUSTION INTERNE

(43) Date of publication of application: 18.02.2015
(73) Proprietor: Toyota Jidosha Kabushiki Kaisha, Toyota-shi, Aichi 471-8571 (JP)
(72) Inventor: OTA, Hirohiko, Toyota-shi Aichi 471-8571 (JP)
(74) Representative: D Young & Co LLP
(86) International application number: PCT/JP2012/059716
(87) International publication number: WO 2013/153606

(56) References cited:
- WO-A1-98/28070
- DE-A1-102006 049 591
- JP-A- H0 333 418
- JP-A- 2006 233 936
- JP-A- 2008 138 594
- JP-A- 2008 180 101
- JP-A- 2009 293 513

## Description

### TECHNICAL FIELD

The present invention relates to an exhaust purification device that purifies exhaust by injecting a liquid additive agent from an injection mechanism into an upstream side of a catalyst arranged in an exhaust passage of an internal combustion engine.

In the prior art, this type of an exhaust purification device is described, for example, in patent document 1. The device described in patent document 1 injects a urea solution from an injection valve into an upstream side of a selective reduction catalyst arranged in an exhaust passage and purifies exhaust by reducing nitrogen oxide (NOx) included in the exhaust.

In the device of patent document 1, a heating device is arranged in a supply passage, through which the urea solution is provided to the injection valve. The heating device heats the urea solution in the supply passage. This enhances vaporization of the urea solution and increases the NOx removal rate.

### PRIOR ART DOCUMENT

### PATENT DOCUMENT

Patent Document 1: Japanese Laid-Open Patent Publication No. 2010-65581. WO9828070 discloses a method and apparatus for reducing harmful emissions from a lean-burn engine by urea injection SCR, in which urea or an equivalent is rapidly vaporised upon injection into exhaust gases on an as-needed basis.

DE102006049591 discloses a selective catalytic reduction system for purification of internal combustion engine exhaust gases, particularly diesel exhaust, comprising a feed pump for transferring aqueous urea solution from a reservoir through an electrical heater for preheating or superheating, and a nozzle for injecting it as finely dispersed spray into the gases upstream of a catalyst unit.

### SUMMARY OF THE INVENTION

### PROBLEMS THAT ARE TO BE SOLVED BY THE INVENTION

When the urea solution is heated and injected in this manner, the urea solution may be vaporized the moment the urea solution is injected into the exhaust passage. This decreases the mass of each particle in the atomized urea solution and lowers the spray penetration. As a result, the urea solution remains around an injection outlet of the injection valve. This leads to a problem in which there is a tendency of urea depositions forming around the injection outlet.

This problem is not limited to a device that removes NOx by injecting the urea solution from the injection valve. In general, this problem commonly occurs in devices that purify exhausts by injecting a liquid additive agent through an injection mechanism.

It is an object of the present invention to provide an exhaust purification device for an internal combustion engine that enhances vaporization of an additive agent and reduces deposition resulting from an additive agent around an injection outlet of an injection mechanism.

### MEANS FOR SOLVING THE PROBLEM

The means for solving the above problem and the advantages of the operation will now be described.

To achieve the above object, an exhaust purification device for an internal combustion engine that includes an exhaust passage including a catalyst is provided in accordance with the present invention. The exhaust purification device includes an injection mechanism that is configured to inject a liquid additive agent into the exhaust passage at an upstream side of the catalyst to purify exhaust, a heating device that heats the additive agent supplied to the injection mechanism, and a variable pressure mechanism that varies pressure of the additive agent, which is injected from the injection mechanism. The heating device heats the additive agent when the additive agent is injected from the injection mechanism. The variable pressure mechanism increases the pressure of the additive agent, which is injected from the injection mechanism, when temperature of the additive agent is high as compared to when the temperature is low.

In this aspect, the additive agent, which is provided to the injection mechanism, is heated by the heating device. This enhances the vaporization of the additive agent. Further, in this aspect, when the temperature of the additive agent is high, the pressure of the injected additive agent is increased as compared to when the temperature is low. Thus, a decrease in the spray penetration of the injected additive agent may be limited. This reduces the additive agent remaining around the injection outlet of the injection mechanism and reduces the deposition caused by the additive agent and formed around the injection outlet of the injection mechanism.

Accordingly, the present invention enhances the vaporization of the additive agent and reduces the deposition resulting from the additive agent around the injection outlet of the injection mechanism.

In this case, a preferred aspect is such that the variable pressure mechanism varies the pressure of the additive agent supplied to the injection mechanism. In this aspect, the injection mechanism does not have to include a function that varies the pressure of the additive agent. This simplifies the configuration of the injection mechanism.

Further, in this case, a preferred aspect is such that the variable pressure mechanism is a pump that draws in the additive agent from a tank, which stores the additive agent, discharges the additive agent toward the injection mechanism, and is capable of changing a discharge amount of the pump.

In this aspect, by changing the discharge amount of the pump, the pressure of the additive agent injected from the injection mechanism may be changed.

Further, a preferred aspect is such that the exhaust purification device includes a pressure sensor that detects the pressure of the additive agent, which is supplied to the injection mechanism, and a controller that controls the variable pressure mechanism based on a detection result of the pressure sensor to change the pressure of the additive agent, which is supplied to the injection mechanism.

In this aspect, based on the actual pressure of the additive agent provided to the injection mechanism, the variable pressure mechanism may be finely controlled. This allows for accurate control of the pressure of the additive agent injected from the injection mechanism.

Further, a preferred aspect is such that a relationship of the temperature of the additive agent, which is supplied to the injection mechanism, and a target pressure value of the additive agent, which is supplied to the injection mechanism, at the temperature is determined in advance, and the controller controls the variable pressure mechanism so that the pressure of the additive agent, which is supplied to the injection mechanism, becomes equal to the target value.

In this aspect, by using the corresponding relationship of the predetermined temperature of the additive agent and the target value of the pressure, based on the temperature of the additive agent, the target pressure value of the additive agent may be easily and accurately set. Then, by controlling the variable pressure mechanism based on the target pressure value of the additive agent, which is set in the above manner, the actual pressure of the additive agent may be controlled in a preferred manner.

Further, a preferred aspect is such that the exhaust purification device includes a temperature sensor that is configured to detect the temperature of the additive agent, and a controller that is configured to control the variable pressure mechanism based on a detection result of the temperature sensor to change the pressure of the additive agent, which is injected from the injection mechanism.

In this aspect, based on the actual temperature of the additive agent, the variable pressure mechanism may be finely controlled. This allows for accurate control of the pressure of the additive agent injected through the injection mechanism.

Further, a preferred aspect is such that the additive agent is a urea solution.

### BRIEF DESCRIPTION OF THE DRAWINGS

Fig. 1 is a schematic diagram showing the structure of an injection valve in relation with an exhaust purification device of an internal combustion engine according to one embodiment of the present invention.
Fig. 2 is a flowchart showing the procedures for executing heating control on a urea solution in the embodiment.
Fig. 3 is a flowchart showing the procedures for executing pressure control on the urea solution in the embodiment.
Fig. 4 is a map showing the relationship between the temperature of the urea solution and the target pressure value of the urea solution in the embodiment.

### EMBODIMENTS OF THE INVENTION

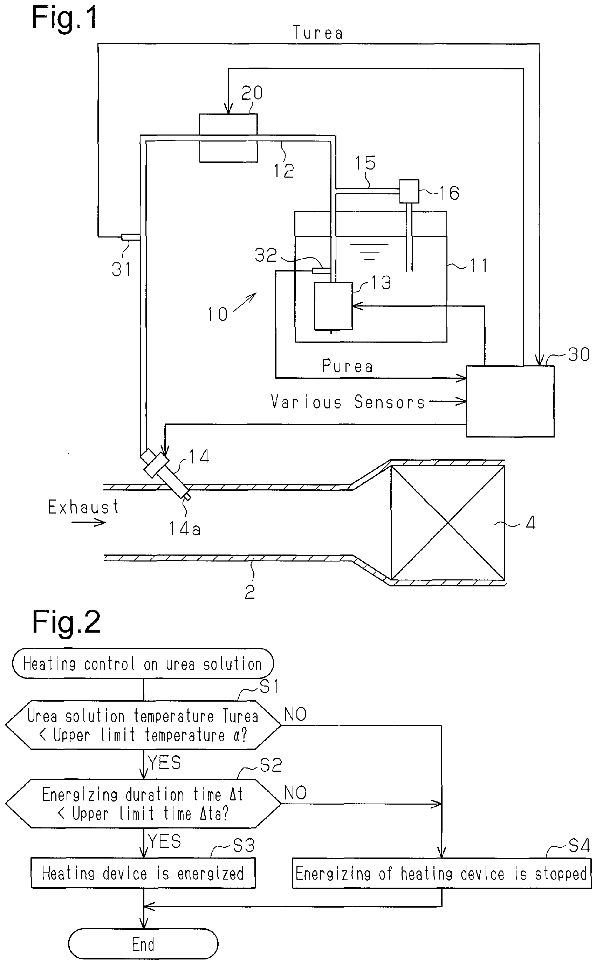

One embodiment of the present invention will now be described with reference to Figs. 1 to 4.

As shown in Fig. 1, an exhaust purification device includes a selective reduction catalyst (hereinafter, referred to as the catalyst 4), which is arranged in an exhaust passage 2 of an internal combustion engine, and an injection valve 14, which is arranged at the upstream side of the catalyst 4 in the exhaust passage 2 and which injects a urea solution.

A supply device 10, which supplies the injection valve 14 with the urea solution, will now be described.

The supply device 10 includes a tank 11, which stores the liquid urea solution, a supply passage 12, which connects the injection valve 14 to the inside of the tank 11, and an electric pump 13, which is connected to the supply passage 12.

The pump 13, which is arranged inside the tank 11, draws in the urea solution inside the tank 11 and discharges the urea solution to the injection valve 14. Further, the pump 13 is capable of changing the discharge amount of the pump 13 by changing a driving mode of the pump 13, more specifically, by changing the rotation speed of an output shaft of the pump 13 (hereinafter, referred to as pump rotation speed). By changing the discharge amount of the pump 13, the pressure of the urea solution injected from the injection valve 14 may be changed.

A return passage 15 branches and extends from an intermediate location of the supply passage 12. A distal end of the return passage 15 opens in the tank 11. A pressure relief valve 16 is arranged at an intermediate location in the return passage 15. The pressure relief valve 16 opens when the pressure of the urea solution in the supply passage 12 increases to an upper limit pressure or higher. The pressure relief valve 16 maintains the pressure of the urea solution in the supply passage 12 at the upper limit pressure or lower.

Additionally, an electrical heating device 20, which heats the urea solution in the supply passage 12, is arranged at an intermediate location in the supply passage 12. The heating device 20 is arranged to cover the circumference of the supply passage 12.

An electronic control unit 30, which functions as a controller, performs various controls including a pump rotation speed control, a control for injecting the urea solution from the injection valve 14, and a control for heating the urea solution with the heating device 20. The electronic control unit 30 is configured to include a central processing unit (CPU), which performs calculations related to various controls, a read-only memory (ROM), which stores programs and data for various controls, a random access memory (RAM), which temporarily stores calculation results or the like, and the like. The electronic control unit 30 reads detection signals from various sensors, performs various calculations, and controls the engine based on the calculation results.

In addition to known sensors used for recognizing the engine operation condition, the various sensors includes a temperature sensor 31, which detects the temperature Turea of the urea solution in the supply passage 12, and a pressure sensor 32, which detects the pressure Purea of the urea solution in the supply passage 12. The temperature sensor 31 is located at the downstream side of the heating device 20 in the supply passage 12. The pressure sensor 32 is arranged at the downstream side of the pump 13 in the supply passage 12.

In the present embodiment, the heating device 20 heats the urea solution in the supply passage 12 until just before the urea solution is vaporized. This enhances the vaporization of the urea solution injected into the exhaust passage 2 and increases the NOx removal rate.

The procedures for executing heating control on the urea solution will now be described with reference to the flowchart in Fig. 2. The series of processes shown in Fig. 2 is repeatedly executed by the electronic control unit 30 in a predetermined cycle when the engine is running.

As shown in Fig. 2, in the series of processes, first, it is determined whether or not the urea solution temperature Turea detected by the temperature sensor 31 is less than an upper limit temperature α (step S1). The upper limit temperature α is slightly lower than the boiling temperature of the urea solution and set in advance based on experiments or the like. If the urea solution temperature Turea is less than the upper limit temperature α (step S1: YES), in step S2, it is determined whether or not an energizing duration time Δt is shorter than an upper limit time Δta. The energizing duration time Δt is the time during which the heating device 20 is continuously energized until the present time.

Initially, in the determination process of step S2, the energizing duration time Δt is less than the upper limit time Δta. Thus, a positive determination is made (step S2: YES). Next, in step S3, the heating device 20 is energized. Then, the series of processes is temporarily terminated.

If the energizing duration time Δt is longer than or equal to the upper limit time Δt, in the determination process of step S2, a negative determination is made (step S2: NO). Next, in step S4, the energizing of the heating device 20 is stopped. Then, the series of processes is temporarily terminated.

Further, if the urea solution temperature Turea is higher than or equal to the upper limit temperature α (step S1: NO), in step S4, the energizing of the heating device 20 is stopped to lower the urea solution temperature Turea. Then, the series of processes is temporarily terminated.

As described above, when the urea solution is heated and injected in this manner, the urea solution may be vaporized the moment the urea solution is injected into the exhaust passage 2. This decreases the mass of each particle in the atomized urea solution and lowers the spray penetration. As a result, the urea solution remains around an injection outlet 14a of the injection valve 14. This leads to a problem in which there is a tendency of urea depositions formed around the injection outlet 14a.

To cope with this problem, in the present embodiment, when the urea solution is injected from the injection valve 14, the urea solution is heated by the heating device 20 and, when the urea solution temperature Turea is high, the urea solution injected from the injection valve 14 is raised to a higher pressure by the pump 13 than when the temperature is low. This enhances the vaporization of the urea solution and limits the urea deposition formed around the injection outlet 14a of the injection valve 14.

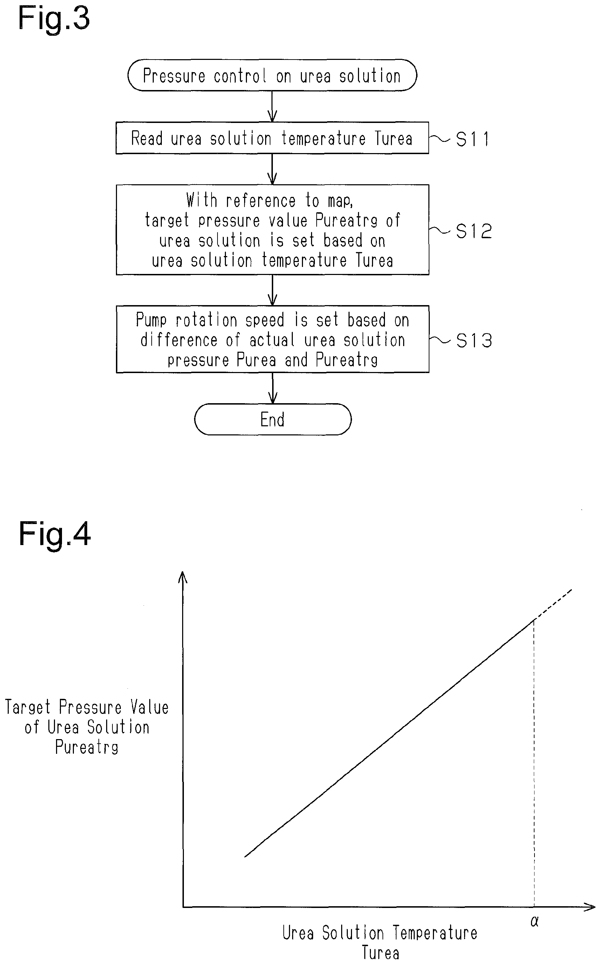

The procedures for executing pressure control on the urea solution will now be described with reference to the flowchart of Fig. 3. The series of processes shown in Fig. 3 is repeatedly executed by the electronic control unit 30 in a predetermined cycle when the engine is running. Fig. 4 is a map showing the relationship of the temperature Turea of the urea solution supplied to the injection valve 14 and the target pressure value Pureatrg of the urea solution supplied to the injection valve 14 in correspondence with the urea solution temperature Turea.

As shown in Fig. 3, in the series of processes, first, the urea solution temperature Turea detected by the temperature sensor 31 is read (step S11). Next, in step S12, with reference to the map shown in Fig. 4, the target pressure value Pureatrg of the urea solution is set based on the read urea solution temperature Turea. As shown in Fig. 4, the target pressure value Pureatrg of the urea solution is increased as the urea solution temperature Turea increases.

In this manner, when the target pressure value Pureatrg of the urea solution is set, in step S13, the pump rotation speed is set based on the difference of the actual urea solution pressure Purea detected by the pressure sensor 32 and the above target value Pureatrg. Then, the series of processes is temporarily terminated. More specifically, the pump rotation speed is feedback-controlled so that the above difference becomes zero, that is, the pressure of the urea solution provided to the injection valve 14 becomes equal to the target pressure value Pureatrg of the urea solution.

The operation of the present embodiment will now be described.

When the urea solution is injected into the exhaust passage 2 through the injection valve 14, the hot exhaust hydrolyzes the urea solution and generates ammonia. The ammonia (NH3) reduces the nitrogen oxide (NOx) suspended in the exhaust and generates nitrogen (N2) and water (H2O). In this manner, the NOx is removed.

In this case, the urea solution supplied to the injection valve 14 is heated by the heating device 20 until just before being vaporized. This enhances the vaporization of the urea solution and increases the NOx removal rate.

Further, the pressure of the urea solution that is injected is raised as the urea solution temperature Turea increases. Thus, a decrease in the spray penetration of the injected urea solution is limited. This reduces the urea solution remained around the injection outlet 14a of the injection valve 14 and limits urea depositions around the injection outlet 14a of the injection valve 14.

In the present embodiment described above, the pump 13 corresponds to the variable pressure mechanism of the present invention, and the injection valve 14 corresponds to the injection mechanism of the present invention.

The exhaust purification device of the internal combustion engine of the present embodiment described above obtains following advantages (1) to (4).

(1) The exhaust purification device of the internal combustion engine injects the urea solution from the injection valve 14 into the exhaust passage 2 at the upstream side of the catalyst 4 to remove nitrogen oxide and purify the exhaust. Further, the heating device 20 heats the urea solution supplied to the injection valve 14. Also, the pump 13, which changes the pressure of the urea solution supplied to the injection valve 14, varies the pressure of the urea solution that is injected from the injection valve 14. When injecting the urea solution from the injection valve 14, the electronic control unit 30 heats the urea solution with the heating device 20. Further, the electronic control unit 30 increases the pressure of the urea solution when the temperature of the urea solution Turea is high as compared to when the temperature is low. This configuration enhances the vaporization of the urea solution and limits the formation of urea deposition around the injection outlet 14a of the injection valve 14. Further, the injection valve 14 does not have to function to vary the pressure of the urea solution. This simplifies the configuration of the injection valve 14.
(2) The pressure sensor 32 detects the pressure Purea of the urea solution supplied to the injection valve 14. The electronic control unit 30 changes the pressure of the urea solution supplied to the injection valve 14 by controlling the driving mode of the pump 13 based on the detection result of the pressure sensor 32. This configuration allows for fine control of the driving mode of the pump 13 based on the actual pressure Purea of the urea solution supplied to the injection valve 14 and accurate control of the pressure of the urea solution injected from the injection valve 14.
(3) The electronic control unit 30 includes the map defining the relationship of the temperature Turea of the urea solution supplied to the injection valve 14 and the target pressure value Pureatrg of the urea solution supplied to the injection valve 14 corresponding to the urea solution temperature Turea. The electronic control unit 30 controls the driving mode of the pump 13 so that the pressure of the urea solution supplied to the injection valve 14 becomes equal to the target pressure value Pureatrg of the urea solution. In this configuration, by using the corresponding relationship of the predetermined urea solution temperature Turea and the target pressure value Pureatrg of the urea solution, the target pressure value Pureatrg of the urea solution may be easily and accurately set based on the urea solution temperature Turea. Then, by controlling the driving mode of the pump 13 based on the target pressure value Pureatrg of the urea solution, which is set in the above manner, the actual pressure of the urea solution may be controlled in a preferred manner.
(4) The temperature sensor 31 detects the urea solution temperature Turea. The electronic control unit 30 changes the pressure of the urea solution injected from the injection valve 14 by controlling the driving mode of the pump 13 based on the detection result of the temperature sensor 31. This configuration allows for fine control of the driving mode of the pump 13 based on the actual pressure Purea of the urea solution and accurate control of the pressure of the urea solution injected from the injection valve 14.

The exhaust purification device of the internal combustion engine of the present invention is not limited to the configuration illustrated in the above embodiment and may be modified, for example, as described below.

In the above embodiment, the temperature sensor 31 detects the urea solution temperature Turea in the supply passage 12. However, the present invention is not limited to this configuration. For example, the temperature of the urea solution may be estimated from the amount of heat applied to the urea solution by the heating device 20, the amount of the urea solution existing in the supply device 10, the ambient temperature of the urea solution, or the like.

In the above embodiment, the target pressure value Pureatrg of the urea solution is set by referring to the map. Instead, the target pressure value Pureatrg of the urea solution may be calculated using a function.

In the above embodiment, the pressure sensor 32 directly detects the urea solution pressure Purea in the supply passage 12. However, the present invention is not limited to this configuration. For example, the relationship of the pump rotation speed and the urea solution pressure may be obtained from experiments or the like in advance, and a target value of the pump rotation speed may be set based on the urea solution temperature Turea. In this case, also, the pressure of the urea solution injected from the injection valve 14 may be changed in accordance with the urea solution temperature Turea.

In the above embodiment, the pressure of the urea solution supplied to the injection valve 14 is changed by controlling the pump rotation speed. In addition, the pressure of the urea solution supplied to the injection valve 14 may be changed by the pressure of the pressure relief valve 16 when open.

The above embodiment and the modified examples illustrate a variable pressure mechanism that varies the pressure of the urea solution supplied to the injection valve 14. However, the variable pressure mechanism of the present invention is not limited to this configuration. More specifically, an injection mechanism that includes a variable pressure function may also be employed.

The above embodiment and the modified examples illustrate the exhaust purification device that injects the urea solution from the injection mechanism at the upstream side of the catalyst 4. However, the liquid additive agent of the present invention is not limited to a urea solution. It is only necessary that a liquid additive agent is injected from the injection mechanism at the upstream side of the catalyst to purify the exhaust.

### DESCRIPTION OF REFERENCE SYMBOLS

- 2: Exhaust Passage
- 4: Catalyst
- 10: Supply Device
- 11: Tank
- 12: Supply Passage
- 13: Pump (Variable Pressure Mechanism)
- 14: Injection Valve (Injection Mechanism)
- 14a: Injection Outlet
- 15: Return Passage
- 16: Pressure Relief Valve
- 20: Heating Device
- 30: Electronic Control Unit
- 31: Temperature Sensor
- 32: Pressure Sensor

## Claims

1. An exhaust purification device for an internal combustion engine that includes an exhaust passage (2) including a catalyst (4), the exhaust purification device comprising:
an injection mechanism (14) that is configured to inject a liquid additive agent into the exhaust passage (2) at an upstream side of the catalyst (4) to purify exhaust;
a heating device (20) that is configured to heat the additive agent supplied to the injection mechanism (14); and
a variable pressure mechanism (13) that is configured to vary pressure of the additive agent, which is injected from the injection mechanism (14), the exhaust purification device being **characterised by**:
a controller (30) that is configured to control the heating device (20) to heat the additive agent so that the temperature of the additive agent is limited to a temperature below the boiling point of the additive agent when the additive agent is injected from the injection mechanism (14), and to control the variable pressure mechanism (13) so that the pressure of the additive agent, which is injected from the injection mechanism (14), is increased in accordance with increases of the temperature of the additive agent.

2. The exhaust purification device for an internal combustion engine according to claim 1, wherein the variable pressure mechanism (13) is configured to vary the pressure of the additive agent supplied to the injection mechanism (14).

3. The exhaust purification device for an internal combustion engine according to claim 2, wherein the variable pressure mechanism (13) is a pump (13) that is configured to draw in the additive agent from a tank (11), which stores the additive agent, to discharge the additive agent toward the injection mechanism (14), and to change a discharge amount of the pump (13).

4. The exhaust purification device for an internal combustion engine according to claim 2 or 3, comprising:
a pressure sensor (32) that is detects the pressure of the additive agent, which is supplied to the injection mechanism (14); wherein the
controller (30) that is configured to control the variable pressure mechanism (13) based on a detection result of the pressure sensor (32) to change the pressure of the additive agent, which is supplied to the injection mechanism (14).

5. The exhaust purification device for an internal combustion engine according to claim 4, wherein
a relationship of the temperature of the additive agent, which is supplied to the injection mechanism (14), and a target pressure value of the additive agent, which is supplied to the injection mechanism (14), at the temperature is determined in advance, and
the controller (30) is configured to control the variable pressure mechanism (13) so that the pressure of the additive agent, which is supplied to the injection mechanism (14), becomes equal to the target value.

6. The exhaust purification device for an internal combustion engine according to any one of claims 1 to 5, comprising:
a temperature sensor (31) that is configured to detects the temperature of the additive agent; wherein the
controller (30) is configured to control the variable pressure mechanism (13) based on a detection result of the temperature sensor (31) to change the pressure of the additive agent, which is injected from the injection mechanism (14).

7. The exhaust purification device for an internal combustion engine according to any one of claims 1 to 6, wherein the additive agent is a urea solution.

## Patentansprüche

1. Abgasreinigungsvorrichtung für einen Verbrennungsmotor, der einen Auslassdurchgang (2), der einen Katalysator (4) enthält, enthält, wobei die Abgasreinigungsvorrichtung aufweist:
einen Einspritzungsmechanismus (14), der konfiguriert ist, um ein flüssiges Additivmittel in den Auslassdurchgang (2) an einer stromaufwärts gelegenen Seite des Katalysators (4) einzuspritzen, um Abgas zu reinigen,
eine Erwärmungsvorrichtung (20), die konfiguriert ist, um das Additivmittel, das an den Einspritzungsmechanismus (14) geliefert wird, zu erwärmen, und
einen Variabler-Druck-Mechanismus (13), der konfiguriert ist, um einen Druck des Additivmittels, das von dem Einspritzungsmechanismus (14) eingespritzt wird, zu variieren, wobei die Abgasreinigungsvorrichtung **gekennzeichnet ist durch**:
ein Steuergerät (30), das konfiguriert ist, um die Erwärmungsvorrichtung (20) zu steuern, um das Additivmittel zu erwärmen, so dass die Temperatur des Additivmittels auf eine Temperatur unter dem Siedepunkt des Additivmittels begrenzt wird, wenn das Additivmittel von dem Einspritzungsmechanismus (14) eingespritzt wird, und um den Variabler-Druck-Mechanismus (13) zu steuern, so dass der Druck des Additivmittels, das von dem Einspritzungsmechanismus (14) eingespritzt wird, in Übereinstimmung mit Erhöhungen der Temperatur des Additivmittels erhöht wird.

2. Abgasreinigungsvorrichtung für einen Verbrennungsmotor gemäß Anspruch 1, wobei der Variabler-Druck-Mechanismus (13) konfiguriert ist, um den Druck des Additivmittels, das an den Einspritzungsmechanismus (14) geliefert wird, zu variieren.

3. Abgasreinigungsvorrichtung für einen Verbrennungsmotor gemäß Anspruch 2, wobei der Variabler-Druck-Mechanismus (13) eine Pumpe (13) ist, die konfiguriert ist, um das Additivmittel aus einem Behälter (11), der das Additivmittel speichert, einzusaugen, um das Additivmittel in Richtung des Einspritzungsmechanismus (14) abzugeben, und um eine Abgabemenge der Pumpe (13) zu ändern.

4. Abgasreinigungsvorrichtung für einen Verbrennungsmotor gemäß Anspruch 2 oder 3, die aufweist:
einen Druckmesswertgeber (32), der den Druck des Additivmittels, das an den Einspritzungsmechanismus (14) geliefert wird, detektiert,
wobei das Steuergerät (30) konfiguriert ist, um den Variabler-Druck-Mechanismus (13) basierend auf einem Detektionsergebnis des Druckmesswertgebers (32) zu steuern, um den Druck des Additivmittels, das an den Einspritzungsmechanismus (14) geliefert wird, zu ändern.

5. Abgasreinigungsvorrichtung für einen Verbrennungsmotor gemäß Anspruch 4, wobei
eine Beziehung der Temperatur des Additivmittels, das an den Einspritzungsmechanismus (14) geliefert wird, und eines Solldruckwerts des Additivmittels, das an den Einspritzungsmechanismus (14) geliefert wird, bei der Temperatur im Voraus bestimmt wird, und
das Steuergerät (30) konfiguriert ist, um den Variabler-Druck-Mechanismus (13) zu steuern, so dass der Druck des Additivmittels, das an den Einspritzungsmechanismus (14) geliefert wird, gleich dem Sollwert wird.

6. Abgasreinigungsvorrichtung für einen Verbrennungsmotor gemäß einem der Ansprüche 1 bis 5, die aufweist:
einen Temperaturmesswertgeber (31), der konfiguriert ist, um die Temperatur des Additivmittels zu detektieren,
wobei das Steuergerät (30) konfiguriert ist, um den Variabler-Druck-Mechanismus (13) basierend auf einem Detektionsergebnis des Temperaturmesswertgebers (31) zu steuern, um den Druck des Additivmittels, das von dem Einspritzungsmechanismus (14) eingespritzt wird, zu ändern.

7. Abgasreinigungsvorrichtung für einen Verbrennungsmotor gemäß einem der Ansprüche 1 bis 6, wobei das Additivmittel eine Harnstofflösung ist.

## Revendications

1. Dispositif de purification de gaz d'échappement pour un moteur à combustion interne qui comprend un passage d'échappement (2) comprenant un catalyseur (4), le dispositif de purification de gaz d'échappement comprenant :
un mécanisme d'injection (14) qui est configuré pour injecter un agent additif liquide dans le passage d'échappement (2) au niveau d'un côté amont du catalyseur (4) afin de purifier les gaz d'échappement ;
un dispositif de chauffage (20) qui est configuré pour chauffer l'agent additif fourni au mécanisme d'injection (14) ; et
un mécanisme à pression variable (13) qui est configuré pour faire varier la pression de l'agent additif, qui est injecté à partir du mécanisme d'injection (14), le dispositif de purification de gaz d'échappement étant **caractérisé par** :
un dispositif de commande (30) qui est configuré pour commander le dispositif de chauffage (20) de sorte qu'il chauffe l'agent additif afin que la température de l'agent additif soit limitée à une température inférieure au point d'ébullition de l'agent additif lorsque l'agent additif est injecté à partir du mécanisme d'injection (14), et pour commander le mécanisme à pression variable (13) afin que la pression de l'agent additif, qui est injecté à partir du mécanisme d'injection (14), soit augmentée conformément aux augmentations de la température de l'agent additif.

2. Dispositif de purification de gaz d'échappement pour un moteur à combustion interne selon la revendication 1, dans lequel le mécanisme à pression variable (13) est configuré pour faire varier la pression de l'agent additif fourni au mécanisme d'injection (14).

3. Dispositif de purification de gaz d'échappement pour un moteur à combustion interne selon la revendication 2, dans lequel le mécanisme à pression variable (13) est une pompe (13) qui est configurée pour aspirer l'agent additif à partir d'un réservoir (11), dans lequel est stocké l'agent additif, pour refouler l'agent additif en direction du mécanisme d'injection (14) et pour modifier un volume de refoulement de la pompe (13).

4. Dispositif de purification de gaz d'échappement pour un moteur à combustion interne selon la revendication 2 ou 3, comprenant :
un capteur de pression (32) qui est détecte la pression de l'agent additif, qui est fourni au mécanisme d'injection (14) ; dans lequel le dispositif de commande (30) est configuré pour commander le mécanisme à pression variable (13), en fonction d'un résultat de détection du capteur de pression (32), de sorte qu'il modifie la pression de l'agent additif, qui est fourni au mécanisme d'injection (14).

5. Dispositif de purification de gaz d'échappement pour un moteur à combustion interne selon la revendication 4, dans lequel
une relation entre la température de l'agent additif, qui est fourni au mécanisme d'injection (14), et une valeur de pression cible de l'agent additif, qui est fourni au mécanisme d'injection (14), à la température est déterminée à l'avance, et
le dispositif de commande (30) est configuré pour commander le mécanisme à pression variable (13) afin que la pression de l'agent additif, qui est fourni au mécanisme d'injection (14), devienne égale à la valeur cible.

6. Dispositif de purification de gaz d'échappement pour un moteur à combustion interne selon l'une quelconque des revendications 1 à 5, comprenant :
un capteur de température (31) qui est configuré pour détecter la température de l'agent additif ; dans lequel
le dispositif de commande (30) est configuré pour commander le mécanisme à pression variable (13), en fonction d'un résultat de détection du capteur de température (31), de sorte qu'il modifie la pression de l'agent additif, qui est injecté à partir du mécanisme d'injection (14).

7. Dispositif de purification de gaz d'échappement pour un moteur à combustion interne selon l'une quelconque des revendications 1 à 6, dans lequel l'agent additif est une solution d'urée.
